# EUROPEAN PATENT APPLICATION

(11) **EP 2 498 371 A1**
(43) Date of publication of application: **12.09.2012**
(21) Application number: 10827974.6
(22) Date of filing: 28.10.2010
(51) Int. Cl.: H02J 7/34, H02J 1/10, H02J 7/35, H02J 13/00

(54) **DC POWER DISTRIBUTION SYSTEM**

(30) Priority: 04.11.2009 JP 2009253404
(71) Applicant: Panasonic Corporation, Kadoma-shi Osaka 571-8501 (JP)
(72) Inventor: MATSUMOTO, Tadashi, Osaka 540-6207 (JP); TAKEHARA, Kiyotaka, Osaka 540-6207 (JP); NAKAKITA, Kenji, Osaka 540-6207 (JP)
(74) Representative: Rocke, Carsten
(86) International application number: PCT/IB2010/002739
(87) International publication number: WO 2011/055191

(57) **Abstract**

A DC power distribution system for supplying a DC power into a building, includes one or more power feeding devices which supply a DC power, a power feeding line for supplying the DC power supplied from the power feeding devices to various sites in the building and sockets located at the various sites and connected to the power feeding line. The DC power distribution system further includes a portable power feeding device which supplies a generated or stored DC power thereof to the power feeding line via a plug which is removably connected to one of the sockets.

## Description

### Field of the Invention

The present invention relates to a DC power distribution system for distributing a DC power in a building.

### Background of the Invention

In recent years, with the spread of residential solar battery and fuel cell usages, there have been proposed various DC power distribution systems for distributing DC powers generated with power generators such as the solar battery, the fuel cell and the like employed in buildings (dwelling units) (see, e.g., Patent document 1).

The conventional system disclosed in Patent document 1 is to supply a DC power, which is fed from a fuel cell, or a DC power converted through AC-DC conversion of an AC power supplied from an AC power system, to DC sockets (DC outlets) located at various sites in a building, and to feed the DC power to load equipments (DC load equipments) plugged in the DC sockets.
Patent Document 1: Japanese Patent Application Publication No. 2003-204682

However, if a capacity of a power feeding device for supplying a DC power becomes insufficient to meet the power feeding requirement from the increased number of DC load equipments used in the building, there is a need to provide additional power feeding devices for parallel power feed or replace the existing power feeding device with a higher capacity one. Unfortunately, due to a limit in a storage space of a box of a power distribution board accommodating power feeding devices, there occurs a case frequently that these additional power feeding devices or a replacement thereof cannot be accommodated in the box and the power distribution board has to be replaced with a new one. Such an addition and/or a replacement of power feeding devices and a replacement of power distribution board may incur high costs.

### Summary of the Invention

In view of the above, the present invention provides a DC power distribution system capable of saving costs required for addition or replacement of a power feeding device.

In accordance with an embodiment of the present invention, there is provided a DC power distribution system including: one or more power feeding devices which supply a DC power; a plurality of sockets connected to the power feeding devices via a power feeding line; and a portable power feeding device which supplies a power to the power feeding line via a plug which is removably connected to one of the sockets.

Further, the power feeding devices distribute the DC power over various sites in a building via the power feeding line, and the sockets are located at the various sites in the building and are connected to the power feeding line. Further, the portable power feeding device supplies a generated or stored DC power thereof to the power feeding line via the plug which is removably connected to said one of the sockets.

With such configuration, if the capacity of the power feeding device is insufficient, the plug of the portable power feeding device is inserted in the socket, so that the DC power can be fed from the portable power feeding device to the power feeding line via the socket. Accordingly, in comparison with a case where the power distribution board is replaced due to an addition and/or a replacement of power feeding devices, costs required for such addition or replacement of power feeding devices can be suppressed.

Further, each of the sockets may include a plug pin receiving unit which is connected to the power feeding line and allowed to receive plug pins of the plug, a voltmeter which measures a DC voltage applied to the plug pin receiving unit via the power feeding line, and a display unit which displays a measurement value of the DC voltage measured by the voltmeter.

With such configuration, in a socket having a short wiring length from a socket which is connected to a load equipment having relatively high power consumption, a DC voltage measurement value displayed on the display unit becomes relatively lowered, so that it is possible to supply a DC current with high efficiency by connecting the portable power feeding device to the corresponding socket.

Further, the portable power feeding device may include a storage battery, and each of the sockets may include a charging/discharging unit which charges the storage battery with the DC power supplied via the power feeding line and supplies the DC power by discharging the storage battery.

With such configuration, when the storage battery serving as the portable power feeding device is connected to the socket, the storage battery can be discharged to supply the DC power to the power feeding line if the capacity of the power feeding device becomes insufficient, and can be charged if the capacity of the power feeding device becomes sufficient.

Further, each of the sockets may include a plug pin receiving unit which is connected to the power feeding line and allowed to receive plug pins of the plug; a voltmeter which measures a DC voltage applied to the plug pin receiving unit via the power feeding line; a communications unit using the power feeding line as a communications medium to make communications; and a control unit which controls the communications unit to transmit a measurement value of a DC voltage measured by the voltmeter. Further, the DC power distribution system described above may further include a display device which communicates with the sockets through the power feeding line serving as the communications medium, and receives the measurement value of the DC voltage transmitted from each of the sockets to display the received measurement value.

With such configuration, in a socket having a short wiring length from a socket which is connected to a load equipment having relatively high power consumption, a DC voltage measurement value displayed on the display device becomes relatively lowered, so that it is possible to supply a DC current with high efficiency by connecting the portable power feeding device to the corresponding socket.

Further, each of the power feeding devices may include a communications unit using the power feeding line as a communications medium to make communications, and a control unit which regularly transmits a maximum current allowed to be supplied from said each of the power feeding devices to each of the sockets via the communications unit. Further, said one of the sockets may include a communications unit using the power feeding line as the communications medium to make communications and a control unit which calculates the sum of maximum currents allowed to be supplied from the power supply devices, which are received by the communications unit of said one of the sockets, obtains a difference between the calculated sum and a maximum allowable current of the power feeding line, sets the obtained difference as an upper limit, and transmits the set upper limit to a different socket via the communications unit of said one of the sockets. The control unit of said one of the sockets may set an upper limit of a limiter of its own as zero upon receiving the upper limit from the different socket.

With such configuration, if an upper limit (a value larger than zero) is set in one socket, upper limits of other sockets are set to be zeroes, and the portable power feeding device can be connected to only said one socket and supply a DC power to the power feeding line.

Further, each of the power feeding devices may include a communications unit using the power feeding line as a communications medium to make communications, and a control unit which regularly transmits a maximum current allowed to be supplied from said each of the power feeding devices to each of the sockets via the communications unit. Further, said one of the sockets may includes a communications unit using the power feeding line as the communications medium to make communications, a storage unit which stores the total number of sockets connected to the power feeding line, and a control unit which calculates the sum of maximum currents allowed to be supplied from the power feeding devices, which are received by the communications unit of said one of the sockets, obtains a difference between the calculated sum and a maximum allowable current of the power feeding line, sets an upper limit by dividing the obtained difference by the total number of sockets.

With such configuration, since the common upper limit can be set to all of the sockets, it is possible to suppress a DC current difference between the sockets.

Further, each of the sockets may include a limiter which limits a DC current supplied from the plug to the power feeding line via the plug pin receiving unit such that the DC current does not exceed a predetermined upper limit.

With such configuration, since a current flowing into the power feeding line has an upper limit and the limiter limits a DC current supplied from the portable power feeding device to the power feeding line via the socket such that the DC current does not exceed the upper limit, the socket can be used with safety.

### Brief Description of the Drawings

The objects and features of the present invention will become apparent from the following description of embodiments, given in conjunction with the accompanying drawings, in which:
Figs. 1A and 1B are a system configuration view and a block diagram of a DC socket, respectively, in accordance with a first embodiment of the present invention;
Fig. 2 is a block diagram of a DC socket in accordance with a second embodiment of the present invention;
Fig. 3 is a block diagram of a DC socket and a display device in accordance with a third embodiment of the present invention;
Fig. 4 is a block diagram of a DC socket in accordance with a fourth embodiment of the present invention; and
Figs. 5A and 5B are a block diagram of a DC socket and a system configuration view, respectively, in accordance with a fifth embodiment of the present invention.

### Detailed Description of the Embodiments

Hereinafter, embodiments of the present invention will be described with reference to the accompanying drawings, which form a part hereof. Throughout the drawings, like reference numerals will be given to like parts, and redundant description thereof will be omitted.

In the following embodiments of the present invention, a DC power distribution system installed at a single-detached dwelling unit will be described in detail. However, the present invention is not limited to the DC power distribution system installed at the single-detached dwelling unit and may be applied to DC power distribution systems installed at a residential complex, an office and the like. Further, in the following embodiments, a socket is illustrated with a DC socket as an example, but the socket is not limited to the DC socket and may include a DC/AC socket or the like.

### (First Embodiment)

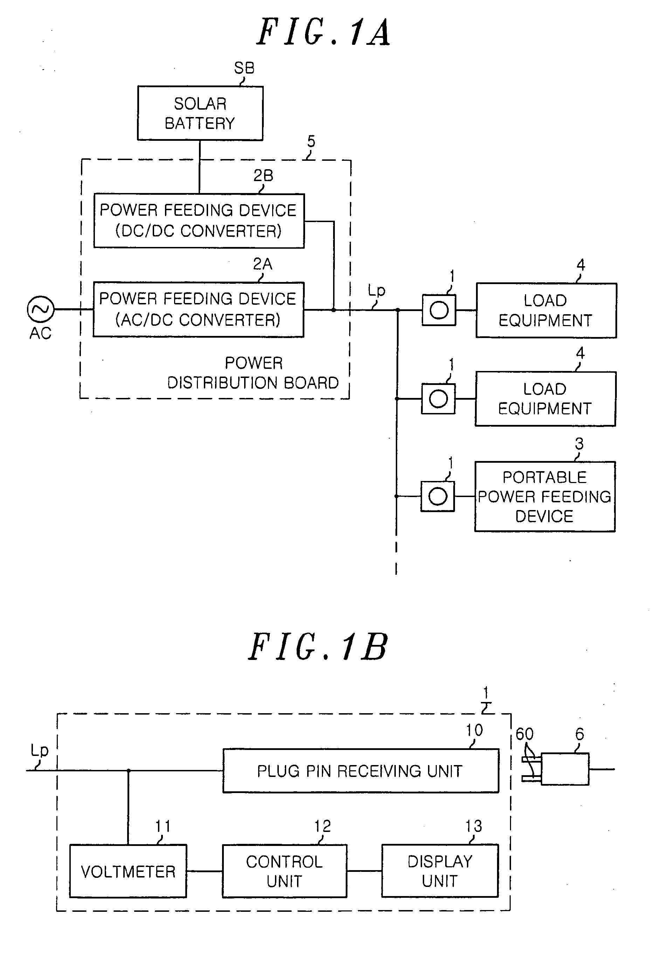

Referring to Fig. 1A, a DC power distribution system in accordance with the first embodiment includes power feeding devices 2A and 2B which supply DC powers, a power feeding line Lp for distributing the DC powers supplied from the power feeding devices 2A and 2B to various sites in a dwelling unit, a plurality of (3 in this example) DC sockets 1 which is installed at the respective sites and connected to the power feeding line Lp, and a portable power feeding device which supplies a generated or stored DC power thereof to the power feeding line Lp via a plug 6 (see Fig. 1B) which may be freely plugged in/out of the DC socket 1.

The power feeding device 2A includes an AC/DC converter which converts an AC power supplied from an AC power system AC into a DC power to be supplied to the power feeding line Lp. The power feeding device 2B includes a DC/DC converter which converts a DC power generated in a solar battery SB into a DC power having a desired voltage level to be supplied to the power feeding line Lp. These two power feeding devices 2A and 2B are accommodated in a box of a power distribution board installed in the dwelling unit. A DC power source used herein is not limited to the solar battery but may include, for example, a fuel cell or a secondary battery such as a lithium ion battery and the like.

Examples of the portable power feeding device 3 may include a solar powered portable generator, a gas powered portable generator using a cassette type gas bomb, a storage battery, an electrical vehicle (including a plug-in hybrid vehicle) and the like. The portable power feeding device 3 supplies the DC power to the power feeding line Lp via the DC socket 1 by plugging the detachable plug 6 attached to a leading end of a power cable into the DC socket 1. The detailed description of the solar powered portable generator, the gas powered portable generator, the electrical vehicle or the like will be omitted since they are well known in the art.

Referring to Fig. 1B, each DC socket 1 includes a plug pin receiving unit 10 which is connected to the power feeding line Lp and receives plug pins 60 of the plug 6, a voltmeter 11 which measures a DC voltage applied to the plug pin receiving unit 10 via the power feeding line Lp, a display unit 13 on which at least a measurement value (numerical value) of the voltmeter 11 can be displayed, a control unit 12 which controls the display unit 13 to display a DC voltage measurement value measured by the voltmeter 11 on the display unit 13, and a housing which has its front side provided with an insert slot (not shown) inserted with the plug 6, and is installed in an embedded hole formed in a wall while accommodating the above-mentioned units 10 to 13.

As shown in Fig. 1A, a plug (not shown) of a load equipment 4 or the plug 6 of the portable power feeding device 3 is inserted in the insert slot of the DC socket 1. if a plug (not shown) of a load equipment 4 is inserted in the insert slot of the DC socket 1, the DC power supplied through the power feeding line Lp is fed to the load equipment 4 via the plug pin receiving unit 10. If the plug 6 of the portable power feeding device 3 is inserted in the insert slot of the DC socket 1, the DC power supplied from the portable power feeding device 3 is fed to the power feeding line Lp via the plug pin receiving unit 10.

If the total capacity of the power feeding devices 2A and 2B becomes insufficient, the plug 6 of the portable power feeding device 3 can be inserted in the DC socket 1, so that the DC power can be fed from the portable power feeding device 3 to the power feeding line Lp via the DC socket 1. Accordingly, in comparison with the conventional case that the power distribution board 5 is replaced due to an addition and/or a replacement of the power feeding devices 2A and 2B, the portable power feeding device 3 can be provided without replacing the power distribution board 5, so that costs required for such addition or replacement of power feeding devices can be suppressed.

In the plurality of DC sockets 1, there may exist a DC socket 1 which has a short wiring length from a DC socket 1 connected to a load equipment 4 having a relatively high power consumption or has a long wiring length from the power feeding devices 2A and 2B. In such DC socket 1, a DC voltage applied to the plug pin receiving unit 10 via the power feeding line Lp is relatively lowered.

In this embodiment, accordingly, the DC voltage applied to the plug pin receiving unit 10 via the power feeding line Lp is measured by the voltmeter 11, and the measurement value is displayed on the display unit 13 under the control of the control unit 12. Further, by connecting the portable power feeding device 3 to the DC socket 1 having a relatively small measurement value displayed on the display unit 13 in the plurality of DC sockets 1, the DC power can be efficiently supplied.

In addition, the control unit 12 may control the display unit 13 to display a message or a sign prompting connection of the portable power feeding device 3 if the measurement value is equal to or smaller than a predetermined threshold.

### (Second Embodiment)

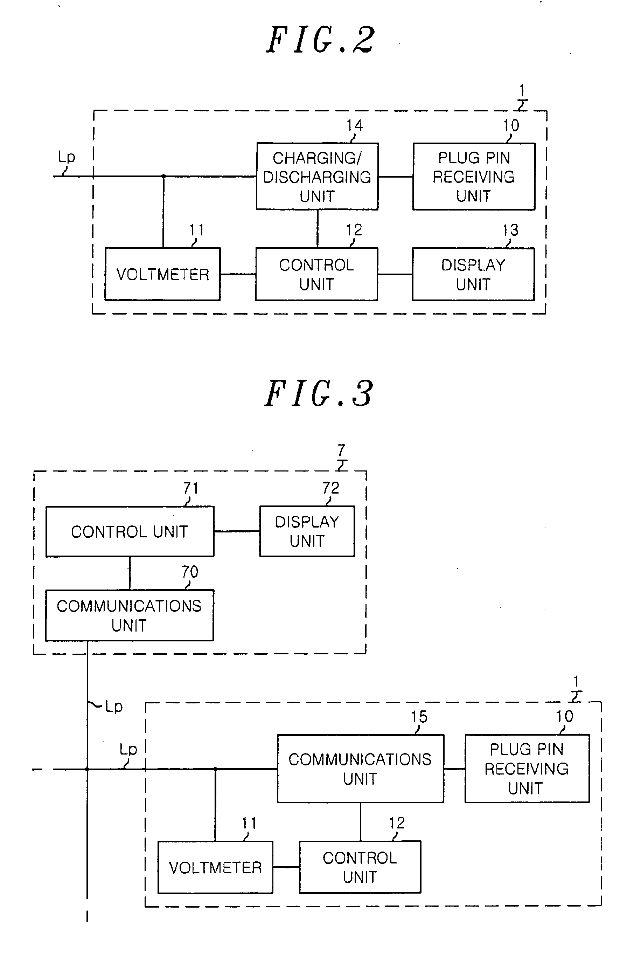

In the second embodiment, a portable power feeding device 3 such as a storage battery is provided and a DC socket 1 includes a charging/discharging unit 14 which charges the storage battery (the portable power feeding device 3) with a DC power supplied via a power feeding line Lp and discharges the storage battery to supply the DC power to the power feeding line Lp, as shown in Fig. 2. This embodiment has the same configuration as the first embodiment except the DC socket 1. Therefore, like reference numerals used in the first embodiment will be given to like parts, and redundant description and drawings thereof will be omitted.

A charging and a discharging operation of the charging/discharging unit 14 can be switched over under the control of the control unit 12. If the storage battery (the portable power feeding device 3) is connected to the plug pin receiving unit 10 via the plug 6, the control unit 12 monitors a voltage of the storage battery through the charging/discharging unit 14 and controls the charging/discharging unit 14 to perform the discharging operation if a measurement value of the voltmeter 11 is smaller than the voltage of the storage battery and perform the charging operation if the measurement value of the voltmeter 11 is larger than the voltage of the storage battery.

For example, if a load equipment 4 having a power consumption (current consumption) in a standby mode significantly different from that in an operation mode is connected to the DC socket 1, the storage battery (the portable power feeding device 3) may be charged in the standby mode of the load equipment 4 and discharged in the operating mode of the load equipment 4.

In this embodiment, as described above, when the storage battery serving as the portable power feeding device 3 is connected to the DC socket 1, the storage battery can be discharged to supply the DC power to the power feeding line Lp if the capacity of the power feeding devices 2A and 2B becomes insufficient, and the storage battery can be charged if the capacity of the power feeding devices 2A and 2B becomes sufficient.

### (Third Embodiment)

In the third embodiment, as shown in Fig. 3, a DC socket 1 includes a communications unit 15 using a power feeding line Lp as a communications medium such that communications are performed between DC sockets 1 via the power feeding line Lp serving as the communications medium, and a display device 7 which receives and displays a measurement value of a DC voltage transmitted from each DC socket 1 is provided.

The communications unit 15 of the DC socket 1 makes communications by superimposing a communications signal carrying data with a high frequency carrier wave over a DC voltage applied to the power feeding line Lp. This is similar to a power line communications in which a communications signal is superimposed over an AC voltage in an AC power line.

The display device 7 includes a communications unit 70 which makes communications similar to the communications unit 15 of the DC socket 1 by superimposing a communications signal carrying data with a high frequency carrier over a DC voltage applied to the power feeding line Lp, a display unit 72 having a display member such as a liquid crystal monitor and a driver circuit of the display member, and a control unit 71 having a microcomputer as its main component.

In addition, unique addresses are respectively assigned to the plurality of DC sockets 1 and the display device 7. Therefore, unicast can be conducted between DC sockets 1 and the display device 7 by designating a particular address. Further, a multicast address is assigned in common to the plurality of DC sockets 1, so that multicast can be conducted from the display device 7 to the DC sockets 1.

The control unit 71 of the display device 7 controls the communications unit 70 to regularly multicast a communications signal carrying a command instructing all of the DC sockets 1 to report respective DC voltage measurement values.

In each of the DC sockets 1, when the communications signal transmitted from the display device 7 is received in the communications unit 15 and the command in the communications signal is received in the control unit 12, a communications signal containing a DC voltage measurement value measured by the voltmeter 11 is unicast from the communications unit 15 to the display device 7.

At this time, since there may occur a collision if the plurality of DC sockets 1 transmits communications signals simultaneously, the communications unit 15 of each of the DC sockets 1 performs a CSMA/CA (Carrier Sense Multiple Access/Collision Avoidance) process in which a carrier sensing is performed before the transmission of the communications signal, and if a carrier is detected, a second carrier sensing is performed after the lapse of a predetermined period of time. Further, if no carrier is detected, the communications signal is transmitted. Polling/selecting type communications may be performed instead of the CSMA/CA communications.

In the display device 7, when the communications signal transmitted from a DC socket 1 is received in the communications unit 70 and the measurement value contained in the communications signal is received in the control unit 71, the control unit 71 instructs the display unit 72 to display an identification code of the corresponding DC socket 1 and the measurement value reported from the corresponding DC socket 1.

Accordingly, by connecting the portable power feeding device 3 to a DC socket 1 having a relatively small measurement value displayed on the display unit 72 of the display device 7 in the plurality of DC sockets 1, the DC power can be efficiently supplied. In addition, the control unit 71 may control the display unit 72 to display a message or a sign prompting connection of the portable power feeding device 3 to a DC socket 1 having the smallest measurement value of the plurality of DC sockets 1.

### (Fourth Embodiment)

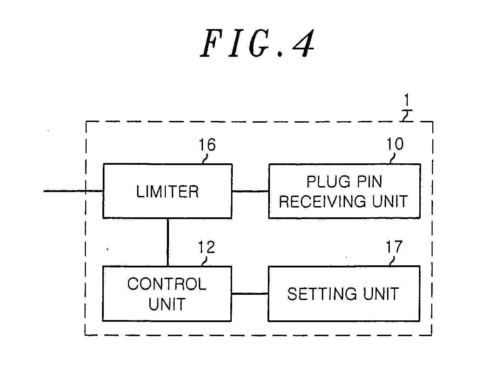

In the fourth embodiment, the DC socket 1 includes, as shown in Fig. 4, a limiter 16 which limits a DC current supplied from the portable power feeding device 3 to the power feeding line Lp via the plug pin receiving unit 10 such that the DC current does not exceed a predetermined upper limit, and a setting unit 17 which sets the upper limit. This embodiment has the same configuration as the first embodiment except the DC socket 1. Therefore, like reference numerals used in the first embodiment will be given to like parts, and redundant description and drawings thereof will be omitted.

In a so-called indoor wiring specification, there is a specified maximum value of current that can flow into the power feeding line Lp depending on a thickness (diameter) and a material of a conductor, the type of an insulator and the like. Accordingly, in case where a DC power is supplied from the portable power feeding device 3 connected to the DC socket 1 to the power feeding line Lp, the sum of DC currents supplied from the all of the power feeding devices (the power feeding devices 2A and 2B and the portable power feeding device 3) via the power feeding line Lp needs not to exceed the maximum value of current.

Accordingly, in this embodiment, each of the DC sockets 1 includes the limiter 16 and the setting unit 17, and the limiter 16 limits the DC current supplied from the portable power feeding device 3 to the power feeding line Lp via the plug pin receiving unit 10 such that the DC current does not exceed the upper limit set by the setting unit 17. The setting unit 17 is configured to have a variable resistor whose resistance can be manually changed, a manually operating dip switch, or the like. The control unit 12 reads out the resistance of the variable resistor or a set value of the dip switch as the upper limit of the DC current. The control unit 12 provides the upper limit of the DC current read out from the setting unit 17 to the limiter 16. The limiter 16 includes a current limiter circuit and an adjustment circuit which adjusts a current limiting value of the current limiter circuit to be the upper limit applied from the control unit 12. The current limiter circuit and the adjustment circuit are well known in the art and, therefore, detailed description and drawings thereof will be omitted.

For example, if a maximum allowable current of the power feeding line Lp is 3 Ampere and the maximum current that can be supplied from each of the power feeding devices 2A and 2B is 1 Ampere, then the upper limit of the DC current is set to be 1 Ampere even if the maximum current that can be supplied from the portable power feeding device 3 is 2 Ampere in the DC socket 1 to which the portable power feeding device 3 is connected. Accordingly, the DC current supplied from the portable power feeding device 3 to the power feeding line Lp via the DC socket 1 is limited to 1 Ampere by the limiter 16, so that it is possible to prevent that a current flowing into the power feeding line Lp exceeds the maximum allowable current (3 Ampere).

### (Fifth Embodiment)

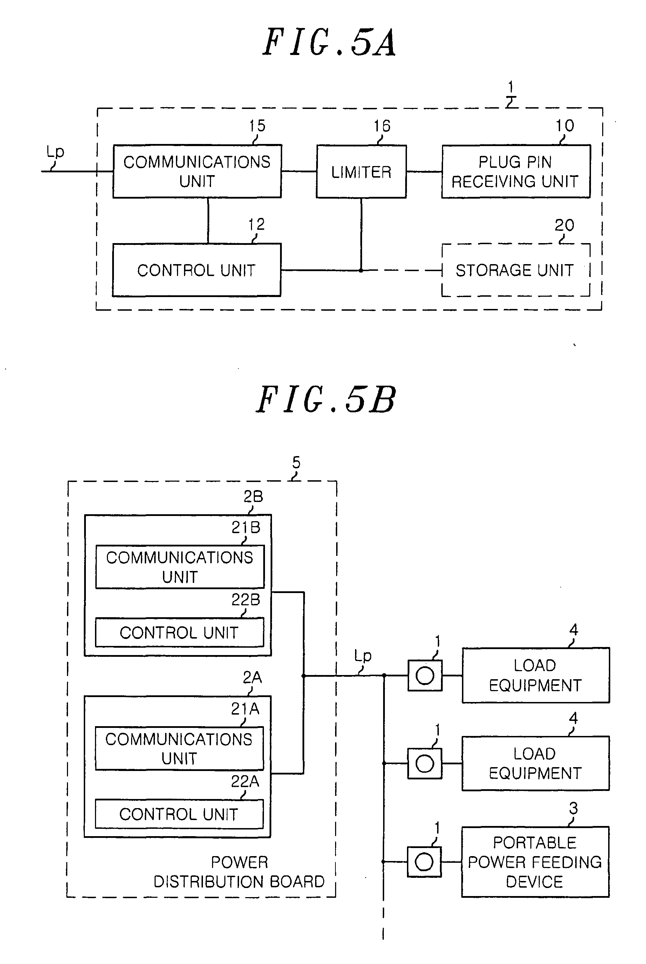

In the fifth embodiment, as shown in Figs. 5A and 5B, the power feeding devices 2A and 2B include respective communications units 21A and 21B using a power feeding line Lp as a communications medium, and respective control units 22A and 22B which regularly transmit a maximum current that can be supplied to the respective DC sockets 1 via the respective communications units. Further, a DC socket 1 includes the communications unit 15 and the limiter 16 described in the third and the fourth embodiment, respectively. This embodiment has the same configuration as the third and the fourth embodiment except the DC socket 1. Therefore, like reference numerals used in the first embodiment will be given to like parts, and redundant description and drawings thereof will be omitted.

Each of the communications units 21A and 21B respectively provided in the power feeding devices 2A and 2B makes communications similar to the communications unit 15 of the DC socket 1 by superimposing a communications signal carrying data with a high frequency carrier wave over a DC voltage applied to the power feeding line Lp. Each of the control units 22A and 22B respectively provided in the power feeding devices 2A and 2B includes a microcomputer as its main component and regularly multicast a communications signal carrying data including the maximum current (rated current value) that can be supplied to the power feeding line Lp from the communications unit 21A and 21B to all of the DC sockets 1.

In each of the DC sockets 1, the communications unit 15 receives the communications signals regularly transmitted from the power feeding devices 2A and 2B and the control unit 12 acquires data including the maximum currents that can be supplied from the power feeding device 2A and 2B, which is contained in the communications signal.

The control unit 12 of a DC socket 1 to which a load equipment 4 is not connected calculates the sum of the maximum currents that can be supplied from the power feeding devices 2A and 2B, and obtains a difference between the calculated sum and the maximum allowable current of the power feeding line Lp. Further, the obtained difference is set as the upper limit in the limiter 16, and the communications signal carrying the set upper limit is unicasted to a different DC socket 1 (a DC socket 1 to which the load equipment 4 is connected) by the communications unit 15.

On the other hand, in the different DC socket 1 to which the load equipment 4 is connected, when the communications unit 15 thereof receives the communications signal transmitted from the DC socket 1 to which the load equipment 4 is not connected and the control unit 12 thereof acquires the upper limit contained in the communications signal and sets the upper limit of the limiter 16 to be 0 Ampere. Thus, even when the portable power supply device 3 instead of the load appliance 4 is connected to the different DC outlet 1, it is determined that a power cannot be supplied from the portable power feeding device 3 to the power feeding line Lp.

For example, if a maximum allowable current of the power feeding line Lp is 3 Ampere and the maximum current (rated current value) that can be supplied from each of the power feeding devices 2A and 2B is 1 Ampere, then the control unit 12 provided in the DC socket 1 to which the load equipment 4 is not connected calculates its own upper limit (1 Ampere = 3 Ampere - (1 Ampere + 1 Ampere), and sets the upper limit in the limiter 16. Further, the control unit 12 informs a different DC socket 1 to which the load equipment 4 is connected of the upper limit.

The control unit 12 of the different DC socket 1, to which the load equipment 4 is connected, sets its own upper limit as 0 Ampere since the upper limit in the DC socket 1, to which the load equipment 2 is not connected, is set as 1 Ampere and, thus, the sum (3 Ampere) of the maximum currents that can be supplied from the power feeding devices 2A and 2B and the maximum current that can be supplied from the portable power feeding device 3 becomes equal to the maximum allowable current value of the power feeding line Lp.

In addition, even when the portable power feeding device 3 instead of the load equipment 4 is connected to the different DC socket 1, a power is not supplied to the power feeding line Lp under the control of the control unit 12 of the different DC socket 1 since the upper limit of the limiter 16 is set as 0 Ampere. In addition, when the portable power feeding device 3 connected to the DC socket 1 is disconnected to stop the supply of power from the portable power feeding device 3, the control unit 12 of the DC socket 1 to which the load equipment 4 is not connected calculates its own upper limit and sets the calculated upper limit in the limiter 16, in accordance with the above-described sequence.

### (Sixth Embodiment)

This embodiment has the same configuration as the fifth embodiment except that the DC socket 1 include a storage unit 20 which stores the total number of DC sockets 1 connected to the power feeding line Lp. Therefore, like reference numerals used in the first embodiment will be given to like parts, and redundant description and drawings thereof will be omitted.

The control unit 12 of the DC socket 1 acquires the total number of DC sockets 1 connected to the power feeding line Lp through communications with a different DC socket 1, by means of the communications unit 15, and store the acquired total number of DC sockets 1 in the storage unit 20 (see, e.g., Fig. 5A). In each of the DC sockets 1, the communications unit 15 receives a communications signal which is regularly transmitted from each of the power feeding devices 2A and 2B, and the control unit 12 thereof acquires data including the maximum current that can be supplied from each of the power feeding devices 2A and 2B, which is contained in the communications signal. Further, the control unit 12 of each of the DC sockets 1 calculates the sum of the maximum currents that can be supplied from the power feeding devices 2A and 2B, and obtains a difference between the calculated sum and the maximum allowable current of the power feeding line Lp. The upper limit is set in the limiter 16 by dividing the obtained difference by the total number of DC sockets 1.

For example, if a maximum allowable current of the power feeding line Lp is 3 Ampere, the maximum current (rated current value) that can be supplied from each of the power feeding devices 2A and 2B is 1 Ampere, and the total number of DC sockets 1 is 3, the control unit 12 in each of the DC socket 1 calculates its own upper limit (0.3 Ampere ≅ {3 Ampere - (1 Ampere + 1 Ampere)} ÷ 3) and sets the upper limit in the limiter 16, accordingly.

In accordance with this embodiment, since the common upper limit can be set to all of the DC sockets 1, it is possible to reduce a DC current difference between the DC sockets 1.

While the invention has been shown and described with respect to the embodiments, it will be understood by those skilled in the art that various changes and modification may be made without departing from the scope of the invention as defined in the following claims.

## Claims

1. A DC power distribution system comprising:
one or more power feeding devices which supply a DC power;
a plurality of sockets connected to the power feeding devices via a power feeding line; and
a portable power feeding device which supplies a power to the power feeding line via a plug which is removably connected to one of the sockets.

2. The DC power distribution system of claim 1, wherein the power feeding devices distribute the DC power over various sites in a building via the power feeding line,
wherein the sockets are located at the various sites in the building and are connected to the power feeding line, and
wherein the portable power feeding device supplies a generated or stored DC power thereof to the power feeding line via the plug which is removably connected to said one of the sockets.

3. The DC power distribution system of claim 2, wherein each of the sockets includes a plug pin receiving unit which is connected to the power feeding line and allowed to receive plug pins of the plug, a voltmeter which measures a DC voltage applied to the plug pin receiving unit via the power feeding line, and a display unit which displays a measurement value of the DC voltage measured by the voltmeter.

4. The DC power distribution system of claim 3, wherein the portable power feeding device includes a storage battery, and each of the sockets includes a charging/discharging unit which charges the storage battery with the DC power supplied via the power feeding line and supplies the DC power by discharging the storage battery.

5. The DC power distribution system of claim 2, wherein each of the sockets includes a plug pin receiving unit which is connected to the power feeding line and allowed to receive plug pins of the plug; a voltmeter which measures a DC voltage applied to the plug pin receiving unit via the power feeding line; a communications unit using the power feeding line as a communications medium to make communications; and a control unit which controls the communications unit to transmit a measurement value of a DC voltage measured by the voltmeter, and
the DC power distribution system further comprises a display device which communicates with the sockets through the power feeding line serving as the communications medium, and receives the measurement value of the DC voltage transmitted from each of the sockets to display the received measurement value.

6. The DC power distribution system of claim 2, wherein each of the power feeding devices includes a communications unit using the power feeding line as a communications medium to make communications, and a control unit which regularly transmits a maximum current allowed to be supplied from said each of the power feeding devices to each of the sockets via the communications unit,
wherein said one of the sockets includes a communications unit using the power feeding line as the communications medium to make communications and a control unit which calculates the sum of maximum currents allowed to be supplied from the power supply devices, which are received by the communications unit of said one of the sockets, obtains a difference between the calculated sum and a maximum allowable current of the power feeding line, sets the obtained difference as an upper limit, and transmits the set upper limit to a different socket via the communications unit of said one of the sockets, and
wherein the control unit of said one of the sockets sets an upper limit of a limiter of its own as zero upon receiving the upper limit from the different socket.

7. The DC power distribution system of claim 2, wherein each of the power feeding devices includes a communications unit using the power feeding line as a communications medium to make communications, and a control unit which regularly transmits a maximum current allowed to be supplied from said each of the power feeding devices to each of the sockets via the communications unit, and
wherein said one of the sockets includes a communications unit using the power feeding line as the communications medium to make communications, a storage unit which stores the total number of sockets connected to the power feeding line, and a control unit which calculates the sum of maximum currents allowed to be supplied from the power feeding devices, which are received by the communications unit of said one of the sockets, obtains a difference between the calculated sum and a maximum allowable current of the power feeding line, sets an upper limit by dividing the obtained difference by the total number of sockets.

8. The DC power distribution system of any one of claims 2 to 7, wherein each of the sockets includes a limiter which limits a DC current supplied from the plug to the power feeding line via the plug pin receiving unit such that the DC current does not exceed a predetermined upper limit.
